# FASCICULE DE BREVET EUROPEEN

(11) **EP 2 769 290 B1**
(45) Date de publication et mention de la délivrance du brevet: **21.02.2018**
(21) Numéro de dépôt: 12781386.3
(22) Date de dépôt: 10.10.2012
(51) Int. Cl.: G06F 3/041, G06F 1/32, G06F 3/044, G06F 3/045

(54) **PROCÈDE D'ACQUISITION DE DONNÉES D'UN CAPTEUR TACTILE MATRICIEL, NOTAMMENT POUR UN ÉCRAN TACTILE**
VERFAHREN ZUR ERFASSUNG DER DATEN EINES MATRIXBERÜHRUNGSSENSORS, INSBESONDERE FÜR EINEN BERÜHRUNGSBILDSCHIRM
METHOD OF ACQUIRING DATA OF A MATRIX TOUCH SENSOR, IN PARTICULAR FOR A TOUCH SCREEN

(30) Priorité: 20.10.2011 FR 1159502
(43) Date de publication de la demande: 27.08.2014
(73) Titulaire: Nissha Printing Co., Ltd., Kyoto-shi, Kyoto 604-8551 (JP)
(72) Inventeur: OLIVIER, Julien, F-33800 Bordeaux (FR); JOGUET, Pascal, F-33670 Sadirac (FR); LARGILLIER, Guillaume, F-33100 Bordeaux (FR)
(74) Mandataire: Müller-Boré & Partner Patentanwälte PartG mbB
(86) Numéro de dépôt international: PCT/FR2012/052298
(87) Numéro de publication internationale: WO 2013/057412

(56) Documents cités:
- WO-A1-2010/015750
- US-A1- 2008 277 171
- US-A1- 2011 193 798

## Description

La présente invention concerne un procédé d'acquisition de données d'un capteur tactile matriciel.

Elle concerne également un capteur tactile matriciel et un écran tactile adaptés à mettre en oeuvre ce procédé d'acquisition de données.

De manière générale, la présente invention concerne l'acquisition de données représentatives d'un ou plusieurs contacts ou points d'appui exercés sur la surface du capteur tactile matriciel.

Elle trouve son application notamment dans les capteurs tactiles matriciels multicontacts adaptés à détecter plusieurs zones de contact ou d'appui simultanément sur la surface du capteur tactile matriciel.

Classiquement, un tel capteur tactile matriciel comprend un réseau matriciel de cellules disposées selon un ensemble de lignes et de colonnes.

Dans son application la plus large, l'invention concerne tout type de capteur tactile matriciel, et par exemple une matrice de cellules de type TFT (Thin Film Transistor), de type photodiode, ou plus généralement de type optique, de type piézo-électrique, de type magnétique, ou encore de type thermique (capteurs CCD ou Charge-Coupled Device).

On connaît un tel capteur tactile matriciel dans le document EP 1 719 047, constitué d'un réseau matriciel de pistes conductrices disposées selon des lignes et des colonnes, les cellules étant ainsi définies au niveau de chaque intersection des lignes et des colonnes du réseau matriciel.

Dans ce document EP 1 719 047, l'acquisition de données est réalisée en balayant séquentiellement chaque cellule du réseau matriciel, c'est-à-dire en alimentant successivement chaque colonne du réseau matriciel et en mesurant successivement, pour chaque colonne alimentée, une caractéristique électrique aux bornes de chaque ligne, représentative d'un niveau d'impédance de la cellule placée à l'intersection de la ligne et de la colonne considérées.

Ce balayage séquentiel des cellules permet de détecter simultanément lors de chaque phase de balayage plusieurs points de contacts sur le capteur tactile matriciel.

Toutefois, il est nécessaire d'effectuer un grand nombre de mesures lors de chaque phase de balayage séquentiel afin de scanner l'ensemble des cellules.

Ainsi, pour un réseau matriciel de cellules constitué de N colonnes et M lignes, le balayage du capteur nécessite à chaque phase de balayage N x M mesures.

Le document US 6 762 752 propose une méthode de balayage accéléré. Dans ce document, dans une première étape, un ensemble de colonnes est alimenté simultanément et une mesure séquentielle est réalisée pour chaque ligne d'un ensemble de lignes.

Ensuite, dans une seconde étape, l'ensemble de lignes est alimenté simultanément et une mesure séquentielle est réalisée pour chaque colonne de l'ensemble de colonnes.

Lorsque plusieurs cellules disposées sur une même ligne et/ou une même colonne sont activées, la méthode identifie des zones d'ambiguïté sur lesquelles un balayage classique séquentiel tel que décrit précédemment en relation avec le document EP 1 719 047 est mis en oeuvre.

Bien que plus rapide, cette méthode, alternant les axes d'alimentation et de mesure du réseau matriciel de cellules, présente l'inconvénient de nécessiter des connexions reconfigurables au niveau des entrées et sorties du circuit électronique de mesure.

La conception du dispositif d'acquisition de données est ainsi complexe.

US 2008/277171 A1 concerne un appareil et un procédé permettant de réduire la consommation d'énergie du dispositif de capacité de détection dans un mode d'alimentation réduite. WO 2010/015750 A1 concerne un procédé d'acquisition et d'analyse d'un capteur tactile multicontacts comprenant une matrice de points de capture et un circuit électronique d'analyse pour commander l'acquisition et l'analyse de la matrice. Ce procédé comporte successivement une étape d'acquisition d'une zone de détection du capteur pour déterminer l'état de chacun des points de contact de la zone de détection et une étape d'analyse de cette zone de détection pour délivrer une information fonction de l'état d'activation des points de contact. Les étapes d'acquisition et d'danalyse sont répétées de manière itérative. L'étape d'acquisition est réalisée sur une zone de détection comportant les points de contact activés déterminés lors de l'étape d'analyse précédente. L'itération est réalisée jusqu'à l'obtention d'une résolution spatiale prédéterminée. Ce document concerne également un circuit électronique d'acquisition et d'analyse et un capteur tactile multicontacts mettant en oeuvre un tel procédé.

La présente invention a pour but de résoudre au moins l'un des inconvénients précités et de proposer un procédé d'acquisition de données permettant d'accélérer le balayage sans complexifier la fabrication d'un capteur tactile matriciel ou du circuit d'électronique de mesure.

A cet effet, la présente invention concerne un procédé d'acquisition de données d'un capteur tactile matriciel comprenant un réseau matriciel de cellules disposées selon un ensemble de lignes et de colonnes.

Selon l'invention, le procédé d'acquisition de données comporte les étapes suivantes :
- activation par connexion à une source d'alimentation électrique des cellules disposées selon une colonne d'au moins un sous-ensemble de colonnes du capteur tactile matriciel ;
- mesure globale d'une caractéristique électrique globale sur toutes les lignes d'au moins un sous-ensemble de lignes dudit capteur tactile matriciel ;
- mesure séquentielle, si ladite caractéristique électrique globale présente une valeur représentative d'un contact sur au moins l'une desdites cellules disposées selon ladite colonne, d'une caractéristique électrique successivement sur chaque ligne dudit au moins un sous-ensemble de lignes ; et
- une réitération desdites étapes de mesure globale et de mesure séquentielle après activation des cellules disposées selon une autre colonne dudit au moins un sous-ensemble de colonnes du capteur tactile matriciel.

Ainsi, ce procédé permet d'optimiser la consommation électrique et de diminuer la durée du balayage lors de chaque phase de balayage de l'ensemble du capteur. En effet, en ajoutant une étape de mesure globale pour chaque colonne activée, la mesure séquentielle au niveau des lignes n'est mise en oeuvre que si un contact est détecté sur au moins une des cellules de la colonne activée.

Selon une caractéristique avantageuse de l'invention, le procédé d'acquisition comprend un mode veille d'acquisition de données si, après activation des cellules de toutes les colonnes dudit au moins un sous-ensemble de colonnes, aucune caractéristique électrique globale mesurée ne présente une valeur représentative d'un contact, ce mode veille d'acquisition de données comprenant les étapes suivantes :
- activation des cellules disposées selon toutes les colonnes dudit au moins un sous-ensemble de colonnes du capteur tactile matriciel ; et
- mesure globale d'une caractéristique électrique globale sur toutes les lignes dudit au moins un sous-ensemble de lignes du capteur tactile matriciel.

La mise en oeuvre d'un mode veille permet de réaliser encore des économies d'énergie, lorsqu'aucun contact n'est présent sur le capteur tactile matriciel.

En effet, les moyens de mesure sont commandés uniquement pour réaliser une mesure globale et non plus selon un balayage des lignes, ce qui limite la consommation d'énergie électrique au niveau d'un microprocesseur de commande.

Selon un mode de réalisation pratique de l'invention, la caractéristique électrique mesurée est une tension, la caractéristique électrique globale étant mesurée aux bornes des lignes dudit au moins un sous-ensemble de lignes connectées en parallèle.

Avantageusement, ledit procédé d'acquisition est mis en oeuvre sur un sous-ensemble de colonnes et un sous-ensemble de lignes dudit capteur tactile matriciel correspondant à une zone d'intérêt de la surface tactile du capteur matriciel.

Avantageusement, le capteur tactile matriciel étant juxtaposé à un écran de visualisation, la zone d'intérêt correspond à une zone d'affichage d'un objet graphique virtuel sur ledit écran de visualisation juxtaposé.

Ainsi, il n'est pas nécessaire de balayer l'intégralité du capteur tactile matriciel dès lors que certaines zones sont sans intérêt et inactives au niveau de la détection d'un toucher ou point d'appui.

En ciblant ainsi le balayage mis en oeuvre sur la ou les zones d'intérêt du capteur tactile, la détection de données correspondant à des points d'appui est encore accélérée.

La présente invention concerne selon un second aspect un capteur tactile matriciel comprenant un réseau matriciel de cellules disposées sur un ensemble de lignes et de colonnes.

Selon l'invention, ce capteur tactile matriciel comprend une interface de capture et un microprocesseur adaptés à mettre en oeuvre le procédé d'acquisition de données conformes à l'invention.

En pratique, les lignes d'au moins un sous-ensemble de lignes du capteur tactile matriciel sont connectées via un multiplexeur à des moyens de mesure d'une caractéristique électrique.

Grâce à ce montage à travers le multiplexeur, il est possible de mesurer une caractéristique électrique globale au niveau de plusieurs lignes du sous-ensemble de lignes, ou au contraire séquentiellement ligne après ligne.

Finalement, la présente invention concerne également un écran tactile comprenant un écran de visualisation et un capteur tactile matriciel conforme à l'invention, l'écran de visualisation et le capteur tactile matriciel étant juxtaposés.

Ce capteur tactile matriciel et l'écran tactile présentent des caractéristiques et avantages analogues à ceux décrits précédemment en relation avec le procédé d'acquisition conforme à l'invention.

D'autres particularités et avantages de l'invention apparaîtront encore dans la description ci-après.

Aux dessins annexés, donnés à titre d'exemples non limitatifs :
- la figure 1 est une vue schématique illustrant un écran tactile conforme à un mode de réalisation de l'invention ;
- la figure 2 est une vue schématique illustrant un capteur tactile matriciel conforme à un mode de réalisation de l'invention ;
- la figure 3 est un algorithme d'un procédé global d'acquisition de données selon un mode de réalisation de l'invention ;
- la figure 4 est un algorithme illustrant un mode veille d'acquisition de données ;
- la figure 5 est un algorithme illustrant le mode d'acquisition de données mettant en oeuvre un balayage rapide selon un mode de réalisation de l'invention ;
- la figure 6 est un algorithme détaillant le mode d'acquisition en balayage complet mis en oeuvre à la figure 5 ;
- les figures 7A à 7E sont des schémas illustrant un exemple de mise en oeuvre du procédé d'acquisition de données sur un capteur tactile matriciel lors de la détection d'un point de contact ; et
- les figures 8A et 8B sont des exemples d'application du procédé d'acquisition de données mis en oeuvre sur un écran tactile conforme à un mode de réalisation de l'invention.

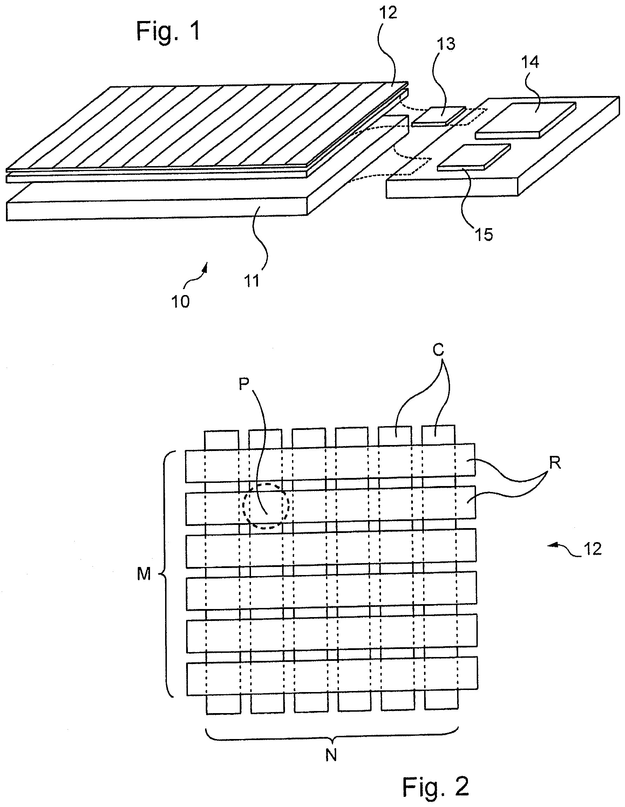

On va décrire tout d'abord en référence à la figure 1 un écran tactile conforme à un mode de réalisation de l'invention.

Un tel écran tactile est notamment décrit selon un mode de réalisation particulier dans le document EP 1 719 047 auquel on pourra se reporter avantageusement pour les détails de réalisation sans lien direct avec la présente invention.

Dans son principe, l'écran tactile 10 comprend un écran de visualisation 11 et un capteur tactile matriciel 12 juxtaposés.

Dans l'exemple de réalisation illustré à la figure 1, le capteur tactile matriciel 12 est transparent et disposé au-dessus de l'écran de visualisation 11.

Bien entendu, la présente invention n'est pas limitée à ce type de mise en oeuvre.

En particulier, un écran souple peut également être disposé au-dessus du capteur tactile matriciel qui peut alors être opaque ou transparent.

L'écran tactile 10 comporte également une interface de capture 13, un microprocesseur principal 14 et un processeur graphique 15.

L'interface de capture 13 constitue des moyens de mesure, permettant notamment d'acquérir des données mesurées au niveau du capteur tactile multicontacts 12.

Cette interface de capture 13 contient les circuits d'acquisition et d'analyse nécessaires à l'acquisition des données, qui peuvent ensuite être transmises au processeur principal 14 pour traitement, puis mise en oeuvre des différentes fonctions de l'écran tactile 10.

On a illustré à la figure 2 un exemple de réalisation d'un capteur tactile matriciel.

Dans son principe, ce capteur tactile matriciel 12 comprend un réseau matriciel de cellules P disposé selon un ensemble de lignes R et de colonnes C.

Dans la suite de la description, et de manière nullement limitative, on considèrera un capteur tactile matriciel constitué d'un réseau matriciel de pistes conductrices, les cellules P étant définies à l'intersection de ces pistes conductrices disposées en lignes R et en colonnes C.

Dans la suite de la description, on considèrera que le capteur tactile matriciel comporte M lignes R et N colonnes C.

Le réseau de pistes conductrices est par exemple réalisé en un matériau conducteur, de préférence translucide, et par exemple au moyen d'oxyde de métaux transparents tels que l'ITO (Oxyde Indium Etain), de solutions à base de nano particules ou encore de micro fils conducteurs.

Un réseau de pistes conductrices inférieures, par exemple les lignes R, peut être positionné sur une couche de verre et un réseau de pistes conductrices supérieures, par exemple les colonnes C, peut être positionné sous une couche de polyéthylène téréphtalate (PET).

L'acquisition des données est alors réalisée à partir de la mesure d'une caractéristique électrique au niveau de chaque cellule P, représentative d'un niveau d'impédance de chaque cellule P.

Notamment, le capteur tactile matriciel peut être du type résistif ou du type capacitif.

Dans le cas d'un capteur tactile matriciel de type résistif, une couche d'air ou une couche sensible à la pression sépare les deux réseaux de pistes conductrices de telle sorte que les lignes R et les colonnes C ne soient pas en contact électrique.

Lorsqu'un appui est réalisé sur la surface extérieure du capteur tactile matriciel 12, l'impédance au niveau de chaque cellule P correspondant à cet appui est modifiée.

En effet, lors d'un toucher ou appui sur la surface extérieure du capteur tactile matriciel 12, les pistes conductrices des lignes R et des colonnes C sont mises en contact au niveau d'une ou plusieurs cellules P du réseau matriciel, de telle sorte qu'une résistance de contact est créée au niveau de ces cellules P et peut être détectée comme explicité ultérieurement.

Bien entendu, le capteur tactile matriciel 12 peut également être un capteur de type capacitif projeté : la position d'un doigt en regard d'une cellule P placée à l'intersection d'une ligne R et d'une colonne C modifie la capacitance au niveau de cette intersection, qui peut également être détectée comme décrit ultérieurement.

On notera bien entendu, que dans toute la description ci-après, la notion de colonnes C et de lignes R est parfaitement intervertible.

De manière générale, afin de réaliser la détection d'une variation d'un niveau d'impédance au niveau des cellules P, chaque colonne C peut être activée, c'est-à-dire connectée à une source d'alimentation électrique et une mesure est réalisée sur une ou plusieurs lignes R par lecture d'une tension aux bornes du circuit électrique ainsi constitué.

Comme cela ressortira ultérieurement de la description du procédé d'acquisition mis en oeuvre dans ce capteur tactile matriciel, les lignes d'au moins une partie du capteur, et de préférence toutes les lignes du capteur tactile matriciel 12, sont connectées via un multiplexeur aux moyens de mesure et de traitement d'une caractéristique électrique.

Ce multiplexeur permet de façon simple de connecter ou déconnecter les lignes au circuit électrique de manière à mesurer séparément ou globalement la tension aux bornes des lignes R.

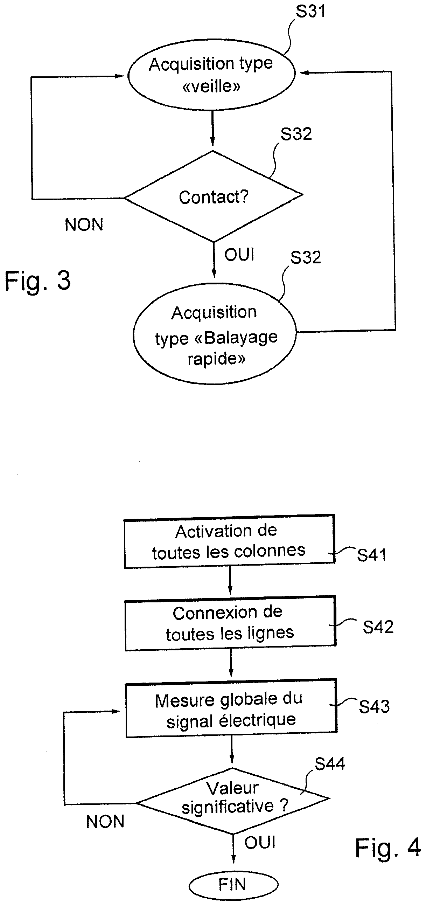

On va décrire à présent en référence aux figures 3 et suivantes un procédé d'acquisition de données mis en oeuvre sur un capteur tactile matriciel tel que décrit précédemment.

On notera que dans ce qui suit, l'acquisition de données au niveau du capteur tactile matriciel correspond à la détection de l'activation de telle ou telle autre cellule P du capteur tactile matriciel 12.

Lorsqu'une telle cellule P est considérée comme activée lors d'un balayage du capteur tactile matriciel, les coordonnées de cette cellule P, ainsi que son niveau d'impédance, sont mémorisées au niveau des moyens de traitement du capteur tactile matriciel 12.

Ultérieurement, à partir des différents points de contact ainsi détectés au niveau de chaque cellule activée P, il est possible par filtrage des données acquises, détermination de zones englobantes, et détection d'un barycentre associé à chaque zone englobante, de déterminer une ou plusieurs zones d'appui ou de toucher correspondant à une zone de contact sur la surface du capteur tactile.

L'ensemble de ces traitements ultérieurs des données acquises au niveau du capteur tactile matriciel 12 est notamment décrit dans le document EP 1 719 047 et n'a pas besoin d'être à nouveau détaillé ici.

Comme illustré à la figure 3, un procédé d'acquisition de données conforme à un mode préférentiel de réalisation de l'invention comprend un mode veille d'acquisition de données S31.

Ce mode veille d'acquisition de données S31 sera décrit ultérieurement en référence à la figure 4.

Il est mis en oeuvre tant qu'aucun contact n'est détecté sur le capteur tactile matriciel 12.

Si à l'issue d'une étape de test S32, un contact est identifié sur le capteur tactile matriciel, la détection de données en mode veille est suspendue et un mode d'acquisition du type « balayage rapide » S32 est alors mis en oeuvre.

On notera que l'utilisation d'un mode veille permet de limiter la consommation électrique du capteur tactile matriciel 12 en l'absence de tout contact sur celui-ci.

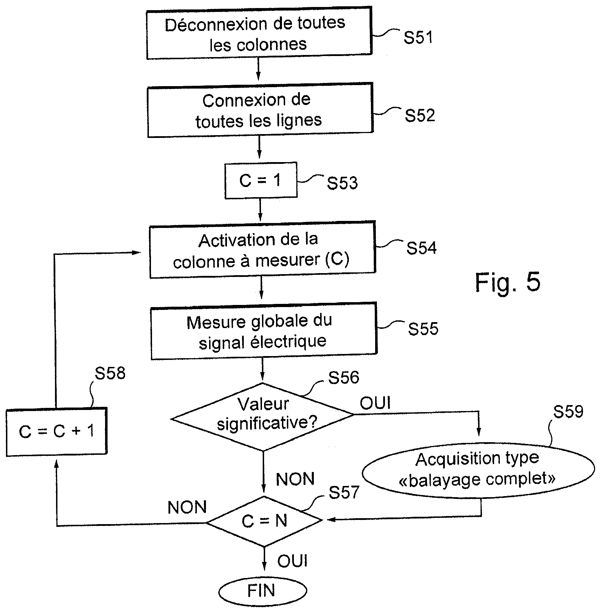

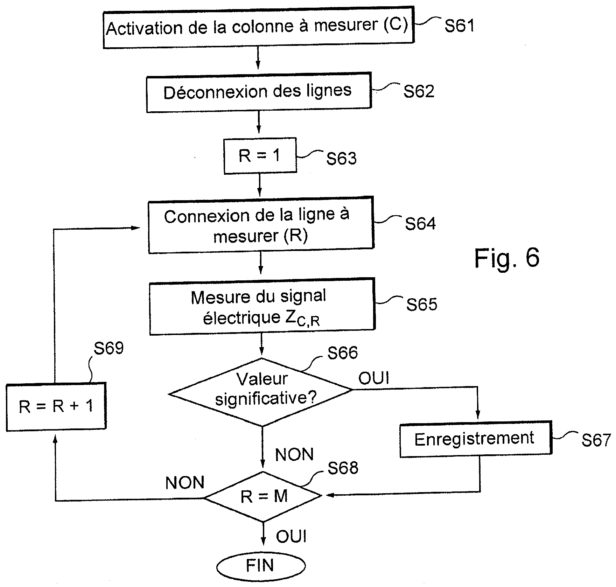

Bien entendu, le mode d'acquisition de données par type « balayage rapide » tel qu'il sera décrit ultérieurement en référence aux figures 5 et 6 peut être mis en oeuvre sans être couplé nécessairement à un mode veille d'acquisition de données.

On considère dans la suite de la description à titre d'exemple non limitatif que le procédé d'acquisition de données est mis en oeuvre sur toutes les colonnes C, au nombre de N, et sur toutes les lignes R, au nombre de M du capteur tactile matriciel 12.

On va décrire tout d'abord en référence à la figure 4 le mode d"acquisition de données mettant en oeuvre un mode veille sur le capteur tactile matriciel.

L'étape d'activation S41 correspond par exemple à la mise en marche de l'appareil ou la mise en route d'un logiciel.

L'étape d'activation S41 est mise en oeuvre au niveau de l'ensemble des colonnes C du capteur tactile matriciel.

Ainsi, toutes les cellules P disposées sur toutes les colonnes C du capteur tactile matriciel sont activées, c'est-à-dire alimentées en courant électrique.

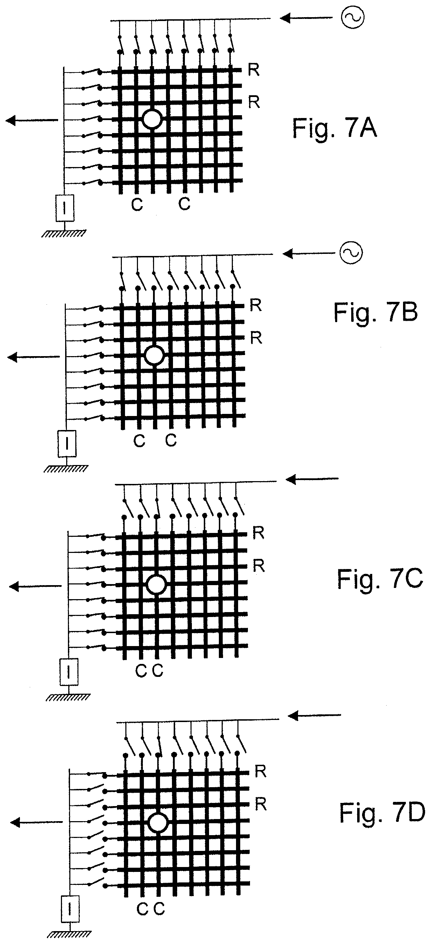

Cette étape d'activation S41 est en particulier illustrée à la figure 7A dans laquelle toutes les colonnes C sont connectées à l'alimentation électrique.

A titre d'exemple, cette alimentation électrique peut être une source de tension électrique de 5 Volt.

Une étape de connexion S42 est ensuite mise en oeuvre afin de connecter l'ensemble des lignes R aux moyens de mesure d'une caractéristique électrique.

Comme indiqué précédemment, et illustré à la figure 7A, la connexion des lignes R peut être réalisée via un multiplexeur.

Une étape de mesure globale S43 est ensuite mise en oeuvre au niveau des lignes R afin de mesurer une caractéristique électrique globale sur l'ensemble des lignes du capteur tactile matriciel.

Dans l'exemple de réalisation mettant en oeuvre un capteur tactile matriciel constitué de pistes conductrices, la caractéristique électrique globale représente une tension mesurée aux bornes de l'ensemble des lignes R connectées en parallèle.

Cette situation est également illustrée à la figure 7A, dans laquelle toutes les lignes R sont connectées en parallèle sur une impédance commune telle qu'une résistance, pour permettre la mesure globale de la caractéristique électrique.

Une étape de test S44 est ensuite mise en oeuvre afin de vérifier si la caractéristique électrique globale mesurée, et par exemple la tension mesurée aux bornes des lignes R du capteur tactile matriciel, présente une valeur représentative d'un contact.

Cette valeur représentative d'un contact correspond à une valeur significative prédéterminée, calibrée lors de la fabrication du capteur tactile matriciel.

Dans la négative, l'étape de mesure globale S43 est réitérée selon une périodicité prédéfinie.

On notera que ce mode veille ne met en oeuvre aucun balayage, ce qui limite la consommation d'énergie au niveau des moyens de mesure et de traitement 13, 14 des signaux associés au capteur tactile matriciel.

La périodicité de mesure mise en oeuvre pour réitérer l'étape de mesure globale S43 en l'absence de contact peut être réglée afin de diminuer encore cette consommation d'énergie électrique et en particulier, dépend du contexte d'utilisation du capteur tactile matriciel.

En revanche, si à l'issue de l'étape de test S44, la caractéristique électrique globale mesurée présente une valeur représentative d'un contact, le mode veille est suspendu.

Dans ce cas, comme illustré à la figure 3, le procédé d'acquisition de données bascule dans un mode d'acquisition du type « balayage rapide » tel qu'il sera décrit ci-dessous aux références 5 et 6.

On notera que le mode veille décrit précédemment permet uniquement de détecter la présence ou non d'un contact sur le capteur tactile matriciel, sans permettre la localisation de ce contact au niveau des cellules P activées.

On va décrire à présent en référence à la figure 5 le mode d'acquisition de type « balayage rapide ».

Ce mode d'acquisition de type « balayage rapide » comporte tout d'abord une étape de déconnexion S51 de toutes les colonnes.

Une étape de connexion S52 des lignes R est ensuite mise en oeuvre comme décrit précédemment, en connectant toutes les lignes via le multiplexeur aux moyens de mesure d'une caractéristique électrique aux bornes de ces lignes R.

Cette situation est illustrée notamment à la figure 7B.

Puis, le procédé d'acquisition comporte une étape d'initialisation S53 des colonnes à balayer.

En pratique, on considère la première colonne C d'indice 1.

Une étape d'activation S54 est ensuite mise en oeuvre afin d'activer les cellules P disposées sur la colonne à mesurer C.

Cette situation est également illustrée à la figure 7B, dans laquelle seule la première colonne est alimentée en courant, les autres colonnes du capteur tactile matriciel étant court-circuitées.

Une étape de mesure globale S55 est ensuite mise en oeuvre afin de mesurer une caractéristique électrique globale sur toutes les lignes R du capteur tactile matriciel.

Une étape de test S56 est alors mise en oeuvre afin de déterminer si la caractéristique électrique globale mesurée présente une valeur représentative d'un contact sur au moins l'une des cellules P disposées sur la colonne à mesurer C.

Comme illustré à la figure 7B, aucune cellule n'étant activée sur la première colonne, à l'issue de l'étape de test S56, on considère que la caractéristique électrique globale mesurée ne présente pas une valeur significative, représentative d'au moins un contact sur la colonne considérée.

On vérifie dans une étape de test S57 si la colonne à mesurer C correspond à la dernière colonne d'indice N du capteur tactile matriciel.

Dans la négative, l'indice de colonne est incrémenté dans une étape d'incrémentation S58 et les étapes d'activation S54 et de mesure globale S55 sont réitérées pour la colonne suivante.

En revanche, dans l'exemple illustré à la figure 7C, pour la colonne d'indice C = 3, la caractéristique électrique globale est considérée comme présentant une valeur significative à l'issue de l'étape de test S56.

Dans ce cas, un mode d'acquisition du type « balayage complet » S59 est mis en oeuvre pour cette colonne à mesurer C.

On notera en effet, qu'à l'issue de l'étape de test S56, et tel qu'illustré à la figure 7C, le mode d'acquisition du type « balayage rapide » permet de détecter la présence d'un point de contact sur une colonne mesurée C mais ne permet pas d'identifier ses coordonnées sur une ligne R spécifique.

Ainsi, comme illustré à la figure 6, un mode d'acquisition du type « balayage complet » est mis en oeuvre pour la colonne mesurée C.

Ainsi, une étape d'activation S61 de la colonne à mesurer C est mise en oeuvre.

En pratique, à l'issue de l'étape de test S56, l'activation de la colonne à mesurer C, initialisée à l'étape d'activation S54, est maintenue comme illustré à la figure 7D.

L'ensemble des lignes R est ensuite déconnecté du multiplexeur dans une étape de déconnection S62, puis on considère une première ligne R d'indice 1 dans une étape d'initialisation S63.

Une étape de connexion S64 est adaptée ensuite à connecter la première ligne d'indice 1 aux moyens de mesure, les autres lignes R du capteur tactile matriciel étant en circuit ouvert.

Cette situation est illustrée à la figure 7D.

Une étape de mesure séquentielle S65 est alors mise en oeuvre pour mesurer une caractéristique électrique sur la ligne à mesurer R.

Dans l'exemple de réalisation décrit ici, cette caractéristique électrique est représentative d'un niveau d'impédance Z_{C,R} au niveau de la cellule P, à l'intersection de la colonne C et de la ligne R.

Une étape de test S66 permet de vérifier si la caractéristique électrique mesurée à l'étape de mesure S65, présente une valeur significative, représentative de la présence d'un contact au niveau de la cellule considérée P.

Dans l'affirmative, une étape d'enregistrement S67 permet de mémoriser la localisation de la cellule activée, c'est-à-dire ses coordonnées dans le capteur tactile matriciel ainsi que la valeur de la caractéristique électrique mesurée.

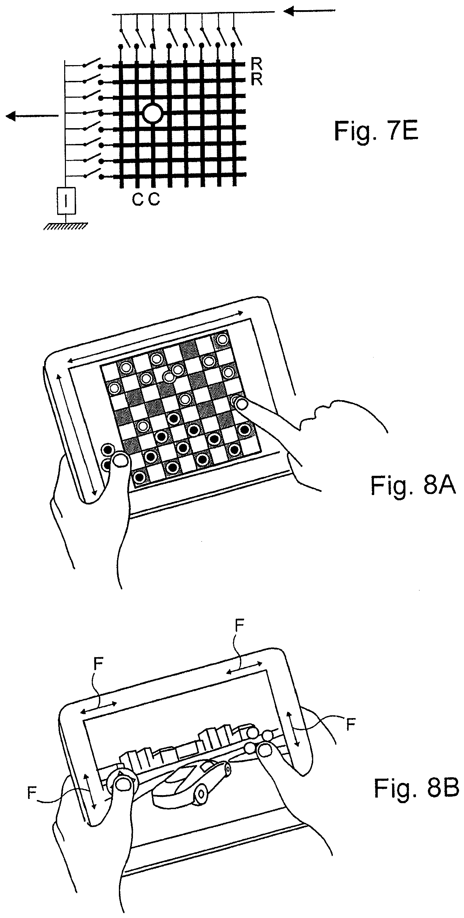

Cette situation est notamment illustrée à la figure 7E, dans laquelle la cellule activée correspond à l'intersection de la colonne d'indice C = 3 et de la ligne d'indice R = 4.

Puis, on considère dans une étape de test S68 si la ligne mesurée R correspond au dernier indice de balayage M.

Dans la négative, l'indice R est incrémenté dans une étape d'incrémentation S69 et les étapes S64 et suivantes sont réitérées sur la ligne suivante.

Si à l'issue de l'étape de test S66, la caractéristique électrique mesurée ne présente pas une valeur significative représentative d'un contact, aucune donnée n'est enregistrée et l'étape de test S68 est réitérée pour balayer l'ensemble des lignes R du capteur tactile matriciel.

Lorsqu'à l'issue de l'étape de test S68, toutes les lignes R du capteur tactile matriciel ont été balayées séquentiellement, l'acquisition du type « balayage complet » est terminé.

En revenant à la figure 5, à l'issue de ce mode d'acquisition de type « balayage complet », l'étape de test S57 décrite précédemment est réitérée afin de vérifier si toutes les colonnes C ont été balayées dans le mode d'acquisition du type « balayage rapide ».

Dans la négative, l'étape d'incrémentation d'indice S58 est mise en oeuvre afin de considérer la colonne suivante et les étapes S54 et suivantes sont réitérées.

Lorsque toutes les colonnes C du capteur tactile matriciel ont été considérées à l'issue de l'étape de test S57, le mode d'acquisition du type « balayage rapide » est terminé.

L'ensemble du processus peut ensuite être de nouveau mis en oeuvre sur le capteur tactile matriciel afin de détecter les points de contact sur le capteur tactile matriciel.

La périodicité du processus de détection dépend du contexte d'utilisation du capteur tactile matriciel.

Si à l'issue du mode d'acquisition du type « balayage rapide » illustré aux figures 5 et 6, aucune caractéristique électrique globale mesurée ne présente une valeur significative d'un contact, le procédé d'acquisition de données peut de nouveau mettre en oeuvre le mode veille.

Ce retour au mode veille peut être réalisé dès qu'aucun contact n'a été identifié lors d'une phase de balayage du capteur tactile matriciel 12, ou encore après un temps de latence prédéterminé, afin d'éviter de basculer en mode veille trop rapidement en cours d'utilisation du capteur tactile matriciel.

Ainsi, la vitesse de balayage du capteur tactile matriciel est accélérée par rapport au mode de réalisation dans lequel seul un mode d'acquisition du type balayage complet est mis en oeuvre.

Ainsi, alors qu'un balayage complet du capteur tactile matriciel nécessite N x M mesures pour détecter les différentes cellules activées P d'un capteur tactile matriciel à N colonnes et M lignes, le procédé d'acquisition mettant en oeuvre le mode d'acquisition de type « balayage rapide » couplé au mode d'acquisition de type « balayage complet », nécessite quant à lui N x (1 + a x M) mesures, où a est le pourcentage des colonnes touchées sur le capteur.

Par expérience, lors de l'utilisation classique d'un capteur tactile multicontacts, et l'utilisation simultanée de deux doigts, environ 20% des colonnes sont touchées, soit un nombre total de mesures nécessaires de N x (1 + 0,2 x M) dans cet exemple de réalisation.

Dans l'exemple de réalisation décrit précédemment, on a illustré la mise en oeuvre du procédé d'acquisition de données sur l'ensemble des lignes et colonnes C du capteur tactile matriciel.

Ce type de mise en oeuvre est particulièrement bien adapté lorsque les touchers ou zones d'appui sur le capteur tactile matriciel peuvent être situés en tout endroit de la zone tactile du capteur lors de son utilisation.

Une telle application est illustrée notamment à la figure 8A, illustrant un échiquier sur lequel l'utilisateur peut être amené à toucher différentes cases disposées en tout endroit de la surface d'un capteur tactile.

En revanche, comme illustré à la figure 8B, certaines applications mises en oeuvre sur un écran tactile peuvent comporter un certain nombre de zones inactives au toucher.

Dans l'exemple illustré à la figure 8B, l'application mise en oeuvre utilise des objets graphiques virtuels du type bouton, joystick, positionnés sur des zones prédéfinies de la surface tactile du capteur tactile matriciel.

La position de ces objets graphiques virtuels manipulables par l'utilisateur correspond ainsi à des zones d'intérêt du capteur tactile matriciel.

Comme illustré par les flèches F, seul un sous-ensemble de lignes et de colonnes, dont les intersections correspondent à des cellules disposées en vis-à-vis des objets graphiques virtuels, peuvent être considérées lors de la mise en oeuvre du procédé d'acquisition de données sur le capteur tactile matriciel.

## Revendications

1. Procédé d'acquisition de données d'un capteur tactile matriciel (12) comprenant un réseau matriciel de cellules (P) disposées selon un ensemble de lignes (R) et de colonnes (C), comportant les étapes suivantes:
- activation (S54) par connexion à une source d'alimentation électrique des cellules disposées selon une colonne (C) d'au moins un sous-ensemble de colonnes du capteur tactile matriciel;
- mesure globale (S55) d'une caractéristique électrique globale sur toutes les lignes (R) d'au moins un sous-ensemble de lignes dudit capteur tactile matriciel;
- mesure séquentielle (S65), si ladite caractéristique électrique globale présente une valeur représentative d'un contact sur au moins l'une desdites cellules disposées selon ladite colonne, d'une caractéristique électrique successivement sur chaque ligne dudit au moins un sous-ensemble de lignes; et
- réitération desdites étapes de mesure globale (S55) et de mesure séquentielle (S65) après activation par connexion à ladite source d'alimentation électrique des cellules disposées selon une autre colonne dudit au moins un sous-ensemble de colonnes du capteur tactile matriciel.

2. Procédé d'acquisition de données conforme à la revendication 1, **caractérisé en ce qu'**il comprend un mode veille d'acquisition de données si, après activation des cellules de toutes les colonnes dudit au moins un sous-ensemble de colonnes, aucune caractéristique électrique globale mesurée ne présente une valeur représentative d'un contact, ledit mode veille d'acquisition de données comprenant les étapes suivantes:
- activation (S41) des cellules (P) disposées selon toutes les colonnes (C) dudit au moins un sous-ensemble de colonnes du capteur tactile matriciel (12); et
- mesure globale (S43) d'une caractéristique électrique globale sur toutes les lignes dudit au moins un sous-ensemble de lignes du capteur tactile matriciel (12).

3. Procédé d'acquisition de données conforme à la revendication 2, **caractérisé en ce que** ledit mode veille d'acquisition est suspendu si une caractéristique électrique globale mesurée présente une valeur représentative d'un contact.

4. Procédé d'acquisition de données conforme à l'une des revendications 1 à 3, **caractérisé en ce que** ladite caractéristique électrique mesurée est une tension, ladite caractéristique électrique globale étant mesurée aux bornes des lignes dudit au moins un sous-ensemble de lignes connectées en parallèle.

5. Procédé d'acquisition de données conforme à l'une des revendications 1 à 4, **caractérisé en ce qu'**il est mis en oeuvre sur un sous-ensemble de colonnes (C) et un sous-ensemble de lignes (R) dudit capteur tactile matriciel (12) correspondant à une zone d'intérêt de la surface tactile du capteur tactile matriciel (12).

6. Procédé d'acquisition de données conforme à la revendication 5, ledit capteur tactile matriciel (12) étant juxtaposé à un écran de visualisation (11), **caractérisé en ce que** ladite zone d'intérêt correspond à une zone d'affichage d'un objet graphique virtuel sur ledit écran de visualisation juxtaposé.

7. Capteur tactile matriciel comprenant un réseau matriciel de cellules (P) disposées selon un ensemble de lignes (R) et de colonnes (C), **caractérisé en ce qu'**il comprend une interface de capture (13) et un microprocesseur (14) adaptés à mettre en oeuvre le procédé d'acquisition de données conforme à l'une des revendications 1 à 6.

8. Capteur tactile matriciel conforme à la revendication 7, **caractérisé en ce que** lesdites lignes (R) et colonnes (C) sont constituées de pistes conductrices, lesdites cellules (P) étant définies à l'intersection desdites pistes conductrices, et ladite caractéristique électrique mesurée est représentative d'un niveau d'impédance (Z_{R,C}) de chaque cellule (P).

9. Capteur tactile matriciel conforme à l'une des revendications 7 ou 8, **caractérisé en ce que** les lignes (R) d'au moins un sous-ensemble de lignes dudit capteur tactile matriciel (12) sont connectées via un multiplexeur à des moyens de mesure d'une caractéristique électrique.

10. Ecran tactile comprenant un écran de visualisation (11) et un capteur tactile matriciel (12) conforme à l'une des revendications 7 à 9, ledit écran de visualisation (11) et ledit capteur tactile matriciel (12) étant juxtaposés.

## Patentansprüche

1. Verfahren zur Erfassung von Daten eines Matrixberührungssensors (12), der ein Matrixnetz aus Zellen (P) umfasst, die entlang einer Menge von Zeilen (R) und von Spalten (C) angeordnet sind, das die folgenden Schritte umfasst:
- Aktivierung (S54) der Zellen, die entlang einer Spalte (C) von mindestens einer Teilmenge von Spalten des Matrixberührungssensors angeordnet sind, durch Verbindung mit einer elektrischen Stromversorgung;
- globale Messung (S55) einer globalen elektrischen Eigenschaft über sämtliche Zeilen (R) von mindestens einer Teilmenge von Zeilen des Matrixberührungssensors;
- sequentielle Messung (S65) einer elektrischen Eigenschaft aufeinanderfolgend auf jeder Zeile von der mindestens einen Teilmenge von Zeilen, wenn die globale elektrische Eigenschaft einen Wert aufweist, der für einen Kontakt auf mindestens einer der Zellen, die entlang der Spalte angeordnet sind, charakteristisch ist; und
- Wiederholung der Schritte der globalen Messung (S55) und der sequentiellen Messung (S65) nach der Aktivierung der entlang einer anderen Spalte von der mindestens einen Teilmenge von Spalten des Matrixberührungssensors angeordneten Zellen durch Verbindung mit der elektrischen Stromversorgung.

2. Verfahren zur Erfassung von Daten nach Anspruch 1, **dadurch gekennzeichnet, dass** es einen Datenerfassungsbereitschaftszustand umfasst, wenn nach der Aktivierung der Zellen von allen Spalten von der mindestens einen Teilmenge von Spalten keine gemessene globale elektrische Eigenschaft einen Wert aufweist, der für einen Kontakt charakteristisch ist, wobei der Datenerfassungsbereitschaftszustand die folgenden Schritte umfasst:
- Aktivierung (S41) der entlang aller Spalten (C) von der mindestens einen Teilmenge von Spalten des Matrixberührungssensors (12) angeordneten Zellen (P); und
- globale Messung (S43) einer globalen elektrischen Eigenschaft auf sämtlichen Zeilen der mindestens einen Teilmenge von Zeilen des Matrixberührungssensors (12).

3. Verfahren zur Erfassung von Daten nach Anspruch 2, **dadurch gekennzeichnet, dass** der Erfassungsbereitschaftszustand ausgesetzt wird, wenn eine gemessene globale elektrische Eigenschaft einen Wert aufweist, der für einen Kontakt charakteristisch ist.

4. Verfahren zur Erfassung von Daten nach einem der Ansprüche 1 bis 3, **dadurch gekennzeichnet, dass** die gemessene elektrische Eigenschaft eine Spannung ist, wobei die globale elektrische Eigenschaft an den Anschlüssen der Zeilen der mindestens einen Teilmenge von parallel geschalteten Zeilen gemessen wird.

5. Verfahren zur Erfassung von Daten nach einem der Ansprüche 1 bis 4, **dadurch gekennzeichnet, dass** es auf einer Teilmenge von Spalten (C) und einer Teilmenge von Zeilen (R) des Matrixberührungssensors (12) durchgeführt wird, die einer Zone von Interesse der Berührungsfläche des Matrixberührungssensors (12) entsprechen.

6. Verfahren zur Erfassung von Daten nach Anspruch 5, wobei der Matrixberührungssensor (12) einem Anzeigebildschirm (11) nebeneinanderliegend angeordnet ist, **dadurch gekennzeichnet, dass** die Zone von Interesse einer Anzeigezone eines virtuellen grafischen Objekts auf dem nebeneinanderliegenden Anzeigebildschirm entspricht.

7. Matrixberührungssensor, der ein Matrixnetz aus Zellen (P) umfasst, die entlang einer Menge von Zeilen (R) und von Spalten (C) angeordnet sind, **dadurch gekennzeichnet, dass** er eine Sensorschnittstelle (13) und einen Mikroprozessor (14) umfasst, die angepasst sind, das Verfahren zur Erfassung von Daten nach einem der Ansprüche 1 bis 6 durchzuführen.

8. Matrixberührungssensor nach Anspruch 7, **dadurch gekennzeichnet, dass** die Zeilen (R) und Spalten (C) aus Leiterbahnen bestehen, wobei die Zellen (P) an der Kreuzung der Leiterbahnen definiert sind, und die gemessene elektrische Eigenschaft für einen Impedanzpegel (Z_{R, C}) von jeder Zelle (P) charakteristisch ist.

9. Matrixberührungssensor nach einem der Ansprüche 7 oder 8, **dadurch gekennzeichnet, dass** die Zeilen (R) von mindestens einer Teilmenge von Zeilen des Matrixberührungssensors (12) über einen Multiplexer mit Mitteln zur Messung einer elektrischen Eigenschaft verbunden sind.

10. Berührungsbildschirm, der einen Anzeigebildschirm (11) und einen Matrixberührungssensor (12) nach einem der Ansprüche 7 bis 9 umfasst, wobei der Anzeigebildschirm (11) und der Matrixberührungssensor (12) nebeneinanderliegen.

## Claims

1. A method of acquiring data of a matrix touch sensor (12) comprising a matrix array of cells (P) arranged according to a set of rows (R) and columns (C), comprising the following steps:
- activating (S54) the cells arranged according to a column (C) of at least one subset of columns of the matrix touch sensor by connection to an electrical power source;
- taking an overall measurement (S55) of an overall electrical characteristic on all the rows (R) of at least one subset of rows of the matrix touch sensor;
- taking a sequential measurement, (S65) if
the overall electrical characteristic has a value representative of a contact, on at least one of those cells arranged according to the column, of an electrical characteristic, successively in each row of said at least one subset of rows; and
- repeating the overall measurement (S55) and a sequential measurement (S65) steps after activating the cells arranged according to another column of said at least one subset of columns of the matrix touch sensor by connection to said electrical power source.

2. The method of acquiring data according to claim 1, **characterized in that** it comprises a sleep mode of acquiring data if, after activating the cells of all columns of said at least one subset of columns, no general electrical property having been measured, shows a value representing a contact, whereby the sleep mode of acquiring data comprises the following steps:
- activating (S41) of cells (P) arranged according to all the columns (C) of said at least one subset of columns of the matrix touch sensor (12); and
- taking an overall measurement (S43) of an overall electrical characteristic in all rows of said at least one subset of rows of the matrix touch sensor (12).

3. The method of acquiring data according to claim 2, **characterized in that** the sleep mode of acquisition is interrupted if a measured overall electrical characteristic shows a value representative of a contact.

4. The method of acquiring data according to one of claims 1 to 3, **characterized in that** the measured electrical characteristic is a voltage, whereby the overall electrical characteristic is being measured at the terminal ends of the rows of said at least one subset of rows, which are connected in parallel.

5. The method of acquiring of data according to one of claims 1 to 4, **characterized in that** it is implemented in one subset of columns (C) and one subset of rows (R) of the matrix touch sensor (12) corresponding to an area of interest of the touch sensitive surface of the matrix touch sensor (12).

6. The method of acquiring data according to claim 5, whereby the matrix touch sensor (12) is being juxtaposed to a display screen (11), **characterized in that** the area of interest corresponds to a display area of a virtual graphic object on the juxtaposed display screen.

7. A matrix touch sensor comprising a matrix array of cells (P) arranged according to one set of rows (R) and columns (C), **characterized in that** it comprises a capture interface (13) and a microprocessor (14) adapted for implementing the method of acquiring data according to one of claims 1 to 6.

8. The matrix touch sensor according to claim 7, **characterized in that** the rows (R) and columns (C) are comprised of conductor tracks, whereby the cells (P) are being defined at the intersection of the conductor tracks and the measured electrical characteristic is representative of an impedance level (Z_{R, c}) of each cell (P).

9. The matrix touch sensor according to one of claims 7 or 8, **characterized in that** the rows (R) of at least one subset of rows of the matrix touch sensor (12) are connected, via a multiplexer, to devices for measuring electrical characteristics.

10. A touch screen comprising a display screen (11) and a matrix touch sensor (12) according to one of claims 7 to 9, whereby the display screen (11) and the matrix touch sensor (12) are being juxtaposed.
